(19) Europäisches Patentamt
European Patent Office
Office européen des brevets

(11) EP 3 927 522 B1

(12) **EUROPEAN PATENT SPECIFICATION**

(45) Date of publication and mention of the grant of the patent:
**11.12.2024 Bulletin 2024/50**

(21) Application number: **20703478.6**

(22) Date of filing: **12.02.2020**

(51) International Patent Classification (IPC):
***B29C 64/118*** *(2017.01)* ***B33Y 70/00*** *(2020.01)*
***B29C 48/00*** *(2019.01)* ***B29C 48/05*** *(2019.01)*
***B29C 48/25*** *(2019.01)* ***D01F 6/46*** *(2006.01)*
*B29K 23/00 (2006.01)* *B29K 105/00 (2006.01)*

(52) Cooperative Patent Classification (CPC):
**B33Y 70/00; B29C 48/022; B29C 48/05; B29C 48/266; B29C 64/118; D01F 6/46;**
B29K 2023/0658; B29K 2023/0666; B29K 2023/0683; B29K 2105/0088; B29K 2105/0094

(86) International application number:
**PCT/EP2020/053521**

(87) International publication number:
**WO 2020/169423 (27.08.2020 Gazette 2020/35)**

(54) **EXTRUSION ADDITIVE MANUFACTURING PROCESS FOR PRODUCING POLYETHYLENE ARTICLES**

VERFAHREN ZUR GENERATIVEN FERTIGUNG DURCH EXTRUSION ZUR HERSTELLUNG VON POLYETHYLENARTIKELN

PROCÉDÉ DE FABRICATION ADDITIVE PAR EXTRUSION POUR LA PRODUCTION D'ARTICLES EN POLYÉTHYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.02.2019 EP 19158288**

(43) Date of publication of application:
**29.12.2021 Bulletin 2021/52**

(73) Proprietors:
- **Basell Polyolefine GmbH**
  **50389 Wesseling (DE)**
- **Albert-Ludwigs-Universität Freiburg**
  **79098 Freiburg (DE)**

(72) Inventors:
- **MIHAN, Shahram**
  **65812 Bad Soden (DE)**
- **LICHT, Erik Hans**
  **55128 Mainz (DE)**
- **MÜLHAUPT, Rolf**
  **79117 Freiburg (DE)**
- **SCHIRMEISTER, Carl Gunther**
  **79211 Denzlingen (DE)**
- **HEES, Timo**
  **79104 Freiburg (DE)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 1 153 968** **EP-B1- 1 153 968**
**CN-A- 103 980 595** **RU-C1- 2 674 019**

- **M S RAMLI ET AL: "FDM PREPARATION OF BIO-COMPATIBLE UHMWPE POLYMER FOR ARTIFICIAL IMPLANT", ARPN J. ENG. APPL. SCI., 3 May 2016 (2016-05-03), pages 5474 - 5480, XP055606794, Retrieved from the Internet <URL:https://pdfs.semanticscholar.org/0ebe/0fc70a92a7cb8b9498a6f871b2d6258f66f4.pdf> [retrieved on 20190718]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **HEES TIMO ET AL: "Wear resistant all-PE single-component composites via 1D nanostructure formation during melt processing", POLYMER, ELSEVIER SCIENCE PUBLISHERS B.V, GB, vol. 151, 24 July 2018 (2018-07-24), pages 47 - 55, XP085447646, ISSN: 0032-3861, DOI: 10.1016/J.POLYMER.2018.07.057**

## Description

FIELD OF THE INVENTION

The present disclosure relates to an extrusion additive manufacturing process, characterized by use of specific polyethylene compositions.

As is known, the extrusion additive manufacturing is based on extruding layers of materials (build materials) and is carried out using an extrusion-based 3D printer.

The disclosure also relates to polyethylene compositions and to filaments of said compositions, for use in the extrusion additive manufacturing process.

BACKGROUND OF THE INVENTION

3D printing is a fast evolving technology. There are various technics developed as listed in VDI 3405 and DIN EN ISO/ ASTM 52900.

An extrusion-based 3D printer is used to build a 3D printed article from a digital representation of the 3D article in a layer-by-layer manner by extruding a flowable build material. The build material is molten and extruded through an extrusion die carried by an extrusion head, and is deposited as a sequence of layers, also called "roads" on a substrate in an x-y plane. The extruded build material fuses to previously deposited build material, and solidifies upon a drop in temperature. The distance of the extrusion head relative to the substrate is then incremented along the z-axis (perpendicular to the x-y plane) and the process is then repeated to form a 3D article resembling the digital representation. Alternatively it is possible to move the substrate and have static extrusion die. For example such filament-free extrusion based 3D printing process is commercially available from ARBURG GmbH & Co.KG.

Movement of the extrusion head with respect to the substrate is performed under computer control, in accordance with build data that represents the 3D article. The build data is obtained by initially slicing the digital representation of the 3D article into multiple horizontally sliced layers. Then, for each sliced layer, the host computer generates a build path for depositing roads of build material to form the 3D article.

An example of extrusion additive manufacturing process carried out with the above described 3D printer, is the Fused Deposition Modeling (FDM) also known as Fused Filament Fabrication (FFF), in which the build material is fed to the extrusion section in form of a filament.

In such process the filament clearly plays an important role, as changing the material of the filament, the final mechanical and aesthetic properties of the finished object change.

Usually, in the art, filaments of polylactic acid (PLA) or acrylonitrile, butadiene, styrene (ABS) polymer or polyamides are used.

One of the most important requirements for a filament is a constant diameter or shape along its length, as otherwise it is not possible to finely tune the amount of material in the printed object. This property is not easily achieved and depends on the characteristics of the polymer.

Furthermore the filament, once prepared, has to be printable and able to provide printed articles having valuable mechanical properties.

Such requirements are often in conflict with each other.

In particular, polyolefins, like polyethylene, are processable with extrusion-based 3D printers, but the resulting printed articles have poor mechanical properties, generally inferior to those obtained by using traditional injection molding processes.

Therefore there is a need for an efficient extrusion additive manufacturing process providing polyolefin based articles with valuable mechanical properties.

Such object has now been achieved by employing a polyethylene composition having specific features, particularly in terms of molecular weights and molecular weight distribution.

Said polyethylene composition contains an ethylene polymer fraction having ultra-high molecular weights, commonly identified in the art as UHMWPE, wherein "UHMW" means, in fact, "Ultra High Molecular Weight" and "PE" stands for polyethylene.

M S Ramli ET AL: "FDM PREPARATION OF BIO-COMPATIBLE UHMWPE POLYMER FOR ARTIFICIAL IMPLANT", ARPN J. Eng. Appl. Sci., 3 May 2016 (2016-05-03), pages 5474-5480, XP055606794 and RU2674019C1, CN103980595B and EP1153968 disclose blends of UHMWPE with an ethylene polymer having lower molecular weights. In Hees, Timo & Zhong, Fan & Koplin, Christof & Jaeger, Raimund & Mülhaupt, Rolf, "Wear resistant all-PE single-component composites via 1D nanostructure formation during melt processing", Polymer 151 (2018) 47-55, it is reported that polyethylene trimodal blends prepared by melt compounding HDPE with bimodal UHMWPE/HDPE wax compositions obtained by ethylene polymerization on supported two-site catalysts, provide a high balance of mechanical properties when processed by injection molding.

It has now been found that such blends provide even improved mechanical properties when used as build material in an extrusion additive manufacturing process.

SUMMARY OF THE INVENTION

Thus the present invention provides an extrusion additive manufacturing process comprising the extrusion of a polyethylene composition (I) having a melt flow index MIE at 190°C with a load of 2.16 kg, according to ISO 1133-2:2011, of at least 0.1 g/10 min., preferably at least 0.5 g/10 min., said polyethylene composition comprising:

A) from 1% to 40% by weight of a polyethylene component having a weight average molar mass $M_w$, as measured by GPC (Gel Permeation Chromatography), equal to or higher than 1,000,000 g/mol;
B) from 1% to 95 % by weight of a polyethylene component having a $M_w$ value from 50,000 to 500,000 g/mol;
C) from 1% to 59 % by weight of a polyethylene component having a $M_w$ value equal to or lower than 5,000 g/mol;

wherein the amounts of components A), B) and C) are referred to the total weight of A) + B) + C), which amounts to 100%.
Such extrusion-based process, also commonly called "extrusion-based 3D printing process", provides final 3-D printed articles with a high balance of mechanical properties, in particular tensile properties.

DETAILED DESCRIPTION OF THE INVENTION

From the above definitions it is evident that the polyethylene composition (I) is a multimodal composition containing polyethylene components with different molecular weights.
Said polyethylene components, in particular the polyethylene component A), B) and C), can be selected from ethylene homopolymers and ethylene copolymers.
The term "copolymer" is meant to embrace ethylene polymers containing one or more kinds of comonomers.
The comonomer or comonomers present in the ethylene copolymers are generally selected from olefins having formula $CH_2$=CHR wherein R is an alkyl radical, linear or branched, having from 1 to 10 carbon atoms.
Specific examples are propylene, butene-1, pentene-1, 4-methylpentene-1, hexene-1, octene-1 and decene-1. A particularly preferred comonomer is hexene-1.
Preferred amounts of polyethylene components A), B) and C) in the polyethylene composition (I) are from 4% to 35% by weight of A), from 50% to 95 %, more preferably from 64% to 95% by weight, of B) and from 1% to 40 %, more preferably from 1% to 30% by weight, of C), wherein the amounts of components A), B) and C) are referred to the total weight of A) + B) + C), which amounts to 100%.
Preferably, the polyethylene components A) and C) are presen in the polyethylene composition (I) in a weight ratio A)/C) of 5 or lower, more preferably of 3 or lower, in particular from 0.5 to 5, from 0.5 to 3.5, or from 0.5 to 3.
Preferably, the polyethylene component A) shows a GPC peak (GPC peak (1)) at a molecular weight of from 1,000,000 to 3,000,000 g/mole, more preferably from 1,000,000 to 2,500,000 g/mole.
The high $M_w$ values of polyethylene component A) reveals the presence of UHMWPE.
Preferred $M_w$ values for polyethylene component A) are equal to or higher than 1,500,000 g/mole, or equal to or higher than 1,800,000 g/mole, in particular:

- from 1,500,000 to 6,000,000 g/mole; or
- from 1,500,000 to 4,500,000 g/mole; or
- from 1,800,000 to 6,000,000 g/mole; or
- from 1,800,000 to 4,500,000 g/mole.

Preferred $M_w/M_n$ values for polyethylene component A) are equal to or less than 5, in particular from 5 to 1.2, or from 5 to 1.5, wherein $M_n$ is the number average molar mass, measured by GPC.
Preferably, the polyethylene component C) shows a GPC peak (GPC peak (2)) at a molecular weight of from 700 to 2,500 g/mole, in particular from 700 to 1,500 g/mole.
The low Mw values of polyethylene component C) shows that it is a low polymer, also called "wax".
Preferred $M_w$ values for polyethylene component C) are:

- from 800 to 5,000 g/mole, or
- from 800 to 3,000 g/mole, or
- from 1,000 to 5,000 g/mole, or
- from 1,000 to 3,000 g/mole.

Preferred $M_w/M_n$ values for polyethylene component C) are equal to or less than 5, in particular from 5 to 1.2, or from 5 to 1.5.

Preferred density values, for the polyethylene composition (I) as well as for each of the polyethylene components A), B) and C) are from 0.900 to 0.965 g/cm$^3$, in particular from 0.930 to 0.960 g/cm$^3$, determined according to ISO 1183-1:2012 at 23°C.

A specific upper limit for the density of the polyethylene component A) is of 0.950 g/cm$^3$, in particular of 0.940 g/cm$^3$.

Preferably, the polyethylene component A) and/or the polyethylene component C) are ethylene homopolymers.

Preferred MIE values for the polyethylene composition (I) are from 0.1 to 100 g/10 min., or from 0.1 to 50 g/10 min., in particular from 0.5 to 100 g/10 min., or from 0.5 to 50 g/10 min.

As previously explained, in a preferred embodiment both polyethylene components A) and C) have $M_w/M_n$ values equal to or less than 5, which amounts to a relatively narrow molecular weight distribution.

Such molecular weight distribution can be obtained directly in polymerization by using single-site catalysts, as reported for instance in WO0121668 and WO2011089017, with particular reference to UHMWPE, as for present polyethylene component A), and in EP1188762, with particular reference to low $M_w$ values, as for present polyethylene component C).

It has in fact been found that polyethylene component A) can be prepared by polymerizing the relevant monomers with a polymerization catalyst comprising a cyclopentadienyl complex of chromium, preferably containing $\eta^5$- cyclopentadienyl moieties, in particular [$\eta^5$-3,4,5-trimethyl-1-(8-quinolyl)-2 trimethylsilyl-cyclopentadienyl-chromium dichloride (CrQCp catalyst component), while polyethylene component C) can be prepared by polymerizing the relevant monomers with a polymerization catalyst comprising a bis(imino)pyridine complex of chromium, preferably 2,6-Bis-[1-(2,6-dimethylphenylimino)ethyl] pyridine chromium (III) trichloride (CrBIP catalyst component).

Said catalyst components are preferably supported on a solid component.

As support component, preference is given to using finely divided supports which can be any organic or inorganic solid. Examples are silica gel, magnesium chloride, aluminum oxide, mesoporous materials, aluminosilicates, hydrotalcites and organic polymers such as polyethylene, polypropylene, polystyrene, polytetrafluoroethylene or polymers bearing polar functional groups, for example copolymers of ethylene and acrylic esters, acrolein or vinyl acetate. The support materials used preferably have a specific surface area in the range from 10 to 1000 m$^2$/g, a pore volume in the range from 0.1 to 5 ml/g and a mean particle size of from 1 to 500 $\mu$m.

The two previously described single-site catalyst components used for the preparation of the two polyethylene components A) and C) are preferably applied to a joint support in order to ensure a relatively close spatial proximity of the catalyst centers and thus to ensure good mixing of the different polymers formed.

By using the two catalyst components together on a joint support, it is thus possible to prepare a reactor blend of the polyethylene components A) and C) in a single polymerization step, without requiring a separate preparation and subsequent mechanical mixing of polymer fractions.

The polymerization product is therefore a masterbatch composition, hereinafter called "polyethylene composition (II)" containing the polyethylene components A) and C).

The previously reported relative amounts of polyethylene components A) and C) are obtained by properly setting the relative amounts of the two single-site catalyst components, in particular of CrQCp and CrBIP, which will determine the amounts of A) and C) in the polyethylene composition (II) and consequently in the polyethylene composition (I) as well.

For instance, the CrBIP/CrQCp molar ratio can preferably range from 0.1 to 20, more preferably from 0.3 to 10, in particular from 0.5 to 8.

The polyethylene composition (II) will preferably show the GPC peaks (1) and (2) as previously defined.

The polyethylene composition (II) preferably has a $M_w/M_n$ value equal to or higher than 300, in particular from 300 to 1,500.

In alternative, it is also possible to prepare the two polyethylene components A) and C) separately by polymerizing the relevant monomers in the presence of the respective single-site catalysts.

It is then possible to blend them together with polyethylene component B), or add said polyethylene component B) subsequently, by mechanical mixing in all cases.

The preparation of the supported catalyst is carried out by physisorption or else by means of a chemical reaction, i.e. covalent binding of the components, with reactive groups on the support surface.

The single-site component can be contacted with the support in a suitable solvent, preferably giving a soluble reaction product, an adduct or a mixture.

Suitable and preferred support materials, their mode of preparation and their use for the preparation of supported catalyst are described in WO2005103096.

The said single-site catalyst components, in particular said CrQCp and CrBIP components, generally require to be contacted with an activator, preferably selected from alumoxanes and non-alumoxane activators, in order to achieve

a high polymerization productivity.

Particularly useful alumoxanes are open-chain alumoxane compounds of the general formula (1):

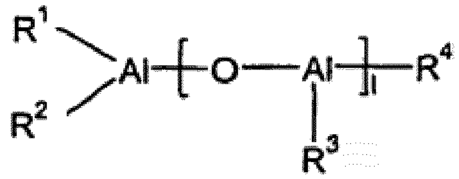

or cyclic alumoxane compounds of the general formula (2):

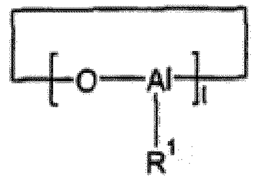

where $R^1$-$R^4$ are each, independently of one another, a $C_1$ -$C_6$-alkyl group, preferably a methyl, ethyl, butyl or isobutyl group and I is an integer from 1 to 40, preferably from 4 to 25.

Preference is given to methylalumoxane (MAO).

Suitable non-alumoxane activators include alkyl aluminums, alkyl aluminum halides, anionic compounds of boron or aluminum, trialkylboron and triarylboron compounds, and the like. Examples are triethylaluminum, trimethylaluminum, tri-isobutylaluminum, diethylaluminum chloride, lithium tetrakis (pentafluorophenyl) borate, triphenylcarbenium tetrakis (pentafluorophenyl) borate, lithium tetrakis (pentafluorophenyl) aluminate, tris (pentafluorophenyl) boron and tris (pentabromophenyl) boron.

Activators are generally used in an amount within the range of about 0.01 to about 10,000, preferably from about 1 to about 5,000 moles per mole of the single-site catalyst.

They can be fed separately to the polymerization zone, supported on the previously described supports during the preparation of the single-site catalyst and/or pre-contacted with the single-site catalyst.

The polymerization process includes gas- phase polymerization, in particular in gas-phase fluidized-bed reactors, solution polymerization and suspension polymerization, in particular in loop reactors and stirred tank reactors. The gas- phase polymerization can also be carried out in the condensed or supercondensed mode, in which part of the circulating gas is cooled to below the dew point and is recirculated as a two- phase mixture to the reactor. Furthermore, it is possible to use a multizone reactor in which two polymerization zones are linked to one another and the polymer is passed alternately through these two zones a number of times. The two zones can also have different polymerization conditions. Such a reactor is described, for example, in WO 97/04015. The different or identical polymerization zones can also, if desired, be connected in series so as to form a polymerization cascade, as in the Hostalen® process, for example. A parallel reactor arrangement using two or more identical or different processes is also possible. Furthermore, molar mass regulators, for example hydrogen, or customary additives, such as antistatics, can also be used in the polymerizations.

The polymerization temperatures are generally in the range from -20 to 115°C, and the pressure is generally in the range from 1 to 100 bar.

In the case of suspension polymerizations, the suspension medium is preferably an inert hydrocarbon such as isobutane or mixtures of hydrocarbons or else the monomers themselves. The solids content of the suspension is generally in the range from 10 to 80%. The polymerization can be carried out either batchwise, e.g. in stirring autoclaves, or continuously, e.g. in tube reactors, preferably in loop reactors.

The polyethylene component B) of the present polyethylene composition is a conventional ethylene homoplymer or copolymer, or a blend thereof.

Preferably, the polyethylene component B) has a density of from 0.930 g/cm$^3$ to 0.970 g/cm$^3$.

Preferred $M_w/M_n$ values for the polyethylene component B) are from more than 5 to 65, more preferably from 8 to 60, or from 8 to 25.

Such ethylene homoplymers and/or copolymers can be prepared with conventional catalysts, in particular Ziegler-Natta or Chromium (Phillips) catalysts in one or more low pressure polymerization steps.

They are widely available on the market.

Specific Examples are the ethylene polymers sold by Basell with the trademark Hostalen®, prepared with the previously mentioned Hostalen® process, using a Ziegler-Natta polymerization catalyst.

As well known in the art, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on MgCh.

Particularly preferred catalysts comprise the product of the reaction of said organometallic compound of group 1, 2 or 13 of the Periodic Table of elements, with a solid catalyst component comprising a Ti compound supported on MgCh.

Preferred organometallic compounds are the previously described alkyl aluminums.

When using the above described polyethylene materials as component B) a mechanical mixing step is required in order to prepare the polyethylene composition (I) by incorporating such component.

However it is also possible to produce the polyethylene composition (I) directly in polymerization with one or more polymerization steps, in the presence of catalysts which are able to produce all polyethylene components A), B) and C) because of their different sensitivity to the molecular weight regulator (hydrogen) or by changing its concentration.

The polyethylene composition (I) may further comprise auxiliaries and/or additives known per se, e.g. processing stabilizers, stabilizers against the effects of light and heat, customary additives such as lubricants, antioxidants, antiblocking agents and antistatics, and also, if appropriate, dyes. A person skilled in the art will be familiar with the type and amount of these additives. They are generally added in amounts of up to 6 % by weight, preferably of from 0.1 to 1 % by weight, with respect to the weight of the polymer material and the additives themselves.

In general, mixing of polyethylene components A), B) and C) and of the additives can be carried out by all known methods. It can be done, for example, by introducing the powder components into a granulation apparatus, e.g. a twin-screw kneader (ZSK), Farrel kneader or Kobe kneader and operating at a temperature at which the polyethylene composition is at least partially molten, for example from 180°C to 220°C.

The specific MI (melt index) values for polyethylene components, A), B) and C) can be broadly selected, provided that the said MIE values of the overall composition are obtained.

In this respect, it is well known that the logarithm of the MI value of polyolefin blends in general, thus of blends of ethylene polymers as well, is given by the sum of the products of the weight fraction and the logarithm of the MI value of the single components.

Thus the MIE value of a composition made of a blend of the said components A) and B) and C) is determined by the following relation:

$$\log \text{MIE (A+B+C)} = \text{wA} \log \text{MIE (A)} + \text{wB} \log \text{MIE (B)} + \text{wC} \log \text{MIE (C)}$$

where MIE (A+B+C) is the MIE value for the blend of A), B) and C), MIE (A), MIE (B) and MIE (C) are the MIE values of components A), B) and C) respectively and wA, wB and wC are the respective weight fractions. For instance, wA, wB and wC are 0.5, 0.3 and 0.2 when the blend is made of 50% by weight of component A), 30% of component B) and 20% by weight of component C).

Preferred MIE values for the polyethylene composition (II) are from 1 g/10 min. to 1000 g/10 min.

Preferred MIE values for the polyethylene component B) are from 0.1 g/10 min. to 50 g/10 min.

Density is calculated by dividing the weight of the blend by its volume.

The volume is the sum of the ratios of the weight of each component to its density.

Thus, for a blend of 50% by weight of component A) with density of 0.93 g/cm$^3$, 30% of component B) with a density of 0.95 g/cm$^3$ and 20% by weight of component C) with density of 0.94 g/cm$^3$, the total density will be:

$$100/(50/0.93 + 30/0.95 + 20/0.94) = 0.94 \text{ g/cm}^3.$$

Articles produced from the present polyethylene composition (I), in particular from filaments comprising the said composition, may be prepared by an extrusion additive manufacturing process wherein the polyethylene composition is at least partially molten, for example at a temperature of from 180° to 280°C, more preferably 190° to 240°C.

As previously explained, the polyethylene composition (I) material is extruded and deposited as a sequence of layers to obtain the 3D article. When using an extrusion-based 3D printer, extrusion is carried out through an extrusion die carried by an extrusion head, and control of the deposition rate may be varied by properly setting the filament feed rate, filament cross sectional dimensions, and the rate of motion of the die head and/or article.

The said deposition may be unidirectional or multidirectional, as illustrated in the examples.

It has been found that, in order to achieve the best mechanical properties, an important process parameter is the shear rate applied during extrusion.

Such shear rate is preferably equal to or greater than 120 s$^{-1}$, more preferably equal to or greater than 150 s$^{-1}$, in particular equal to or greater than 200 s$^{-1}$, the upper limit being preferably of 1000 s$^{-1}$ in all cases.

While carrying out the uni- or multidirectional extrusion additive manufacturing, it is possible to add other - also unmixable - polymers like polypropylene or PVA in one single printing process, to improve elongation at break or stiffness.

EXAMPLES

The practice and advantages of the various embodiments, compositions and methods as provided herein are disclosed below in the following examples. These Examples are illustrative only, and are not intended to limit the scope of the appended claims in any manner whatsoever.
The following analytical methods are used to characterize the polymer compositions.

**Melt flow index MIE**

Determined according to ISO 1133-2:2011 at 190°C with a load of 2.16 kg.

**Density**

Determined according to ISO 1183-1:2012 at 23°C.

**Molecular Weight Distribution Determination via GPC**

The determination of the molar mass distributions, including the GPC peak, and the means Mn, Mw and Mw/Mn derived therefrom was carried out by high-temperature gel permeation chromatography (GPC) using a method described in ISO 16014-1, -2, -4, issues of 2003. The specifics according to the mentioned ISO standards are as follows: Solvent 1,2,4-trichlorobenzene (TCB), temperature of apparatus and solutions 135°C and as concentration detector a Polymer-Char (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.
The solvent was vacuum distilled under Nitrogen and was stabilized with 0.025% by weight of 2,6-di-tert-butyl-4-methylphenol (BHT). The flowrate used was 1 ml/min, the injection was 500μl and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany) in the range from 580g/mol up to 11600000g/mol and additionally with Hexadecane.
The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: $k_{PS}$= 0.000121 dl/g, $\alpha_{PS}$=0.706 and for PE $k_{PE}$= 0.000406 dl/g, $\alpha_{PE}$=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

**Shear Rate**

The shear rate $\dot{\gamma}$ applied to the polymer melt during the printing process was calculated by the following formula:

$$\dot{\gamma} = 4 * \dot{V}/\pi * r^3$$

wherein r indicates the radius of the nozzle (unit: mm) and V is the volumetric flow (unit: $mm^3/s$).
The volumetric flow V was measured for every specific combination of 3D printer, nozzle diameter, temperature, and printing speed (i.e. extrusion speed). For that purpose, the polymer throughput $\dot{m}$ (unit: g/s) was measured gravimetrically and divided by the polymer melt density ρ (unit: $g/mm^3$) according to the following equation: V= $\dot{m}/\rho$
The polymer melt density ρ for melted polyethylene at temperature T (unit: °C) was calculated with the following equation (1): $\rho=[1.262+9.0*10^{-4}(T-125)]^{-1}*10^{-3}$ $g/mm^3$.
Equation (1) is reported in Meissner, J. Hostettler, Rheol. Acta 1994, 33, 1-21.

**Mechanical Properties: Young's Modulus and Tensile Strength**

Mechanical properties were measured with tensile specimens DIN EN ISO 527-2 5A according to the procedure DIN EN ISO 527:2012. The tensile test machine used was Zwick Z005.
The test specimens required for this purpose were injection molded or 3D printed as later explained.

Two kinds of bone sized test specimens were prepared with 3D printing, namely:

i) unidirectional specimens, or
ii) multidirectional specimens.

For the unidirectional specimens i), the 3D printing was carried out with a filling pattern orientation at 0 ° or 90 ° relative to the stress (pulling) direction, which corresponds with the length of the test specimens.

For the multidirectional specimens ii), each 3D printed layer was deposited with alternate filling pattern orientation at 0 ° and 90 ° relative to the stress direction.

The injection molded test specimens were prepared by cutting them out of an injection molded plaque of the polymer material, with the length of each test specimen oriented at 0° or 90° relative to the injection flow.

All the test specimens were clamped vertically after determination of the cross-sectional area and stretched to break.

The specific characteristics were determined from the stress-strain diagrams obtained. The bone sized test specimens were subjected to testing at a pulling speed of up to 50 mm / min. The data were evaluated with the software TESTXPERT II.

Examples 1-6 and Comparison Examples 1-2

## Preparation of the Polyethylene Composition (II)

2,6-Bis-[1-(2,6-dimethylphenylimino)ethyl] pyridine chromium (III) trichloride (CrBIP) was synthesized according to Esteruelas MA, et al. Organometallics 2003;22(3):395-406.

[$\eta^5$-3,4,5-trimethyl-1-(8-quinolyl)-2 trimethylsilyl-cyclopentadienyl-chromium dichloride (CrQCp) was synthesized according to: Enders et al. Organometallics 2004;23(16):3832-9, and Fernández et al. Organometallics 2007;26(18):4402-12.

Preparation of the mixed catalyst system

The mesoporous silica catalyst support (Sylopol XPO2107 of Grace) exhibiting a pore volume of 1.5 ml/g and specific surface of 400 $m^2\ g^{-1}$, was dried in a Schlenk-tube in high-vacuum ($10^{-3}$ bar) at 160 °C for 14 h. 20 mL of toluene were added and the suspension was sonicated for 10 min. After adding of the calculated amount of MAO (Al : Cr = 300 : 1), the mixture was stirred for 30 min and sonicated for 5 min. After sedimentation, the MAO-treated catalyst support was washed with dry toluene by removal and exchange of the supernatant. CrBIP was dissolved in toluene (0.2 mg $mL^{-1}$), pretreated with trimethylaluminum (TMA, 10 equiv.) and added by syringe. After stirring for 5 min, CrQCp in toluene (0.2 mg $mL^{-1}$) was also added and the mixture was stirred again for 5 min. After sedimentation, the activated catalyst was collected in n-heptane (20 mL), transferred into the reactor and the polymerization was started.

Two mixed catalysts were prepared, with different CrBIP/CrQCp molar ratio, obtained by properly dosing the respective solutions, namely:

- Catalyst 1, with a CrBIP/CrQCp molar ratio of 0.8;
- Catalyst 2, with a CrBIP/CrQCp molar ratio of 3.0.

Polymerization

Using the said two catalysts, ethylene polymerizations were carried out in a 2.6 L steel reactor (HITEC ZANG) equipped with a mechanical stirrer, thermostat and a software interface. Therefore, the reactor was heated in high-vacuum at 60 °C for 2 h, filled with *n*-heptane (580 mL) and tri-isobutylaluminum (TiBAl, 3 mL, 1 M in *n*-hexane) and was saturated with ethylene (5 bar). After transferring the prepared catalyst into the reactor, the polymerization was proceeded at 40 °C, an ethylene pressure of 5 bar and stirring speed of 200 rpm for 120 min. The polymer was stabilized with BHT in methanol, filtered and dried under reduced pressure at 60 °C to constant weight.

The properties of the so obtained polyethylene compositions (II), namely composition (II-1) with 33% by weight of A) and composition (II-2) with 63% by weight of A), depending upon the catalyst used, are reported in Table 1 below.

Table 1: properties of Polyethylene Composition (II)

| (II) type | Catalyst used | GPC peak (1) | GPC peak (2) | $M_w$ of A) | $M_w/M_n$ of A) | $M_w$ of C) | $M_w/M_n$ of C) | $M_w/M_n$ of (II) |
|---|---|---|---|---|---|---|---|---|
| | | g/mol | g/mol | g/mol | | g/mol | | |
| (II-1) | Catalyst 1 | 1,200,000 | 890 | 2,000,000 | 3.5 | 1,200 | 3 | >500 |
| (II-2) | Catalyst 2 | 1,200,000 | 800 | 2,000,000 | 4 | 1,000 | 4 | >500 |

Component B)

The Polyethylene Component B) in the examples is a commercial HDPE, sold by Basell with the trademark Hostalen GC7260.

Such HDPE, prepared in a slurry process with a Ziegler-Natta catalyst, has the following properties:

- density: 0,9600 $g/cm^3$;
- MIE: 7.3 g/10 min.;
- $M_w$: 90,500 g/mole;
- $M_w/M_n$: 9.5.

Polyethylene Composition (I)

The above described polyethylene component B) and polyethylene compositions (II-1) and (II-2) respectively were mixed together by compounding, thus obtaining two examples of Polyethylene Composition (I), namely Composition 1 and Composition 2.

The compounding was carried out on a DSM XPLORE MICRO COMPOUNDER 15CC. Each 10.0 g of polymer circulated with a residence time of 60 s and were then extruded and granulated. The parameters used for the compounder are summarized in Table 2 below.

The properties of the resulting compositions are reported in Table 3 below.

Table 2: Parameters for compounding polyethylene components A) and polyethylene compositions (II) for further processing.

| **Parameter** | **Value** |
|---|---|
| T / °C | 200 |
| Revolutions/ Number/min | 100 |
| Filling / g | 10.0 |
| Residence Time / s | 60 |

Table 3: Polyethylene Composition (I)

| PE Composition (I) | Component B) | Precursor Composition (II- 1) | Precursor Composition (II- 2) | Density | MIE |
|---|---|---|---|---|---|
| | Weight% | Weight% | Weight% | $g/cm^3$ | g/10’ |
| Composition 1 | 70 | 30 | 0 | 0.9540 | 8 |
| Composition 2 | 85 | 0 | 15 | 0.9510 | 2.5 |

The amounts of polyethylene components A), B), and C) and the respective Mw values, are reported in Table 4 below.

Table 4: Polyethylene Composition (I) - fractionation

| Composition (I) | Composition 1 | Composition 2 |
|---|---|---|
| A) [wt.-%] | 10 | 10 |
| Mw of A) [g/mol] ** | 2,000,000 | 2,000,000 |
| B) [wt.-%] | 74 | 87 |
| Mw of B) [g/mol] * | 90,500 | 90,500 |
| C) [wt.-%] | 16 | 3 |
| Mw of C) [g/mol] ** | 1,200 | 1,000 |
| * Mw from GPC of Component B);<br>**Mw from GPC of Composition (II). | | |

All Polyethylene composition (I) containing A), B) and C) is alternatively obtainable by co-supportation of three different catalyst precursor complexes as described in Markus Stürzel, Shahram Mihan, and Rolf Mülhaupt, Chem. Rev., 2016, 116 (3), pp 1398-1433.

Filament extrusion

The comparison filament for 3D printing was produced from granules of the said component B) on a twin-screw extruder COLLIN TEACH-LINETM ZK 25T with a round die (2.80 mm diameter). The extruded polymer strand was withdrawn, water cooled and rolled up on printer coils. The parameters used are listed in Table 5 below.

Table 5: Parameters for producing the filament of Polyethylene Component B)

| Parameter | Value |
|---|---|
| $T_{Zone\ 1}$ / °C | 190 |
| $T_{Zone\ 2}$ / °C | 200 |
| $T_{Zone\ 3}$ / °C | 200 |
| $T_{Zone\ 4}$ / °C | 190 |
| Revolutions/ Number/min | 20 |
| Feed Rate/ kg/h | 0.5 |
| Output / mm/s | 52 |

The extrusion of the filament for 3D printing according to the invention was carried out on a RANDCASTLE RCP-MT250 single-screw mini extruder with a round die (2.30 mm diameter). The samples of Polyethylene Composition (I) prepared as described above, were fed to the extruder, after prior milling as below explained, without metering. The extruded polymer strand was withdrawn, water cooled and rolled up on printer coils. The extrusion parameters used are listed in Table 6 below.

Table 6: Extrusion parameters for producing filaments of the polyethylene composition (I)

| **Parameter** | **Value** |
|---|---|
| $T_{Zone\ 1}$ / °C | 190 - 200 |
| $T_{Zone\ 2}$ / °C | 180-200 |
| $T_{Zone\ 3}$ / °C | 180 - 200 |
| Revolutions/ Number/min | 100-120 |
| Output / mm/s | 7-8 |

Milling

Before extrusion, the samples of Polyethylene Composition (I) had to be ground to a particle size of approximately 0.1 mm. Milling was carried out in two steps: First, a particle size of 1 mm was achieved by means of a granulator 1514 from RAPID. Subsequently, the powder was cooled in liquid nitrogen and comminuted to a particle size of 0.1 mm using a rotary mill ZM200 from RETSCH (12-pin blade, 16,000 rpm, 0.5 mm sieve).

**FDM (Fused Deposition Modeling) 3D Printing**

All FDM printed test specimens were produced with an Ultimaker 2+ FDM printer using 100 % infill and a nozzle of 0.8 mm diameter leading to a line width of 0.7mm. The layer thickness was 0.2 mm. Printing temperature and speed were adapted in each case to create the desired mechanical properties.

**Injection molding**

Injection molding of the test specimens for the comparison examples was performed on a DSM Xplore Micro Compounder 5cc together with the injection molding system DSM Xplore 10cc at 220 °C, 8 bar and 8 s of holding pressure. The mold temperature was 60 °C.

The polyethylene materials respectively used in the examples are reported in Table 7 below.

Tables 8 to 10 report the processing conditions and the test results.

Table 7

| Example | Process | Polyethylene material |
|---|---|---|
| 1 | FDM unidirectional | Composition 1 |
| 2 | FDM unidirectional | Composition 1 |
| 3 | FDM multidirectional | Composition 1 |
| 4 | FDM unidirectional | Composition 2 |
| 5 | FDM unidirectional | Composition 2 |
| 6 | FDM unidirectional | Composition 2 |
| Comparison 1 | injection molding | 100% Component B) |
| Comparison 2 | injection molding | Composition 1 |

Table 8

| Example | Process | Processing conditions | | | Printing orientation relative to stress test direction |
|---|---|---|---|---|---|
| | | T [°C] | printing speed [mm/s] | shear rate [$s^{-1}$] | |
| 1 | FDM unidirectional | 210 | 150 | 450 | 0° |
| 2 | FDM unidirectional | 210 | 150 | 450 | 90° |
| 3 | FDM multidirectional | 210 | 150 | 450 | - |
| 4 | FDM unidirectional | 210 | 25 | 110 | 0° |
| 5 | FDM unidirectional | 210 | 100 | 270 | 0° |
| 6 | FDM unidirectional | 210 | 150 | 450 | 0° |

Table 9

| Example | Process | Printing orientation relative to stress test direction | Mechanical properties | |
|---|---|---|---|---|
| | | | Young's-Modulus [MPa] | Strength [MPa] |
| 1 | FDM unidirectional | 0° | 2000 ± 180 | 82 ± 10 |
| 2 | FDM unidirectional | 90° | 1260 ± 40 | 43.7 ± 0.2 |
| 3 | FDM multidirectional | - | 1800 ± 110 | 64 ± 10 |
| 4 | FDM unidirectional | 0° | 1300 ± 60 | 54 ± 2 |
| 5 | FDM unidirectional | 0° | 1400 ± 160 | 70 ± 2 |
| 6 | FDM unidirectional | 0° | 2040 ± 180 | 96 ± 12 |

Table 10

| Example | Process | Injection direction relative to stress test direction | Mechanical properties | |
|---|---|---|---|---|
| | | | Young's-Modulus [MPa] | Strength [MPa] |
| Comp. 1 | Injection molding | 0° | 1010 ± 13 | 26.7 ± 0.2 |
| | | 90° | 1018 ± 10 | 26.3 ± 0.4 |
| Comp. 2 | Injection molding | 0° | 2370 ± 90 | 97 ± 5 |
| | | 90° | 1030 ± 50 | 28 ± 3 |
| Comp. = Comparison | | | | |

As shown in the above tables, 3D printing of the present polyethylene composition allows the production of printed articles whose mechanical properties exceed those of pure polyethylene component B).

Besides, 3D printing of the present polyethylene composition allows the production of parts with isotropic and improved mechanical properties that cannot be produced by injection molding.

Examples of potential applications for 3D printed articles comprising the present polyethylene composition, are tailored protheses with adaptive areas.

Highly wear resistant multidirectional surface and a flexible, damping core are suitable for hip joints whereas the thighbone may be unidirectionally reinforced to create optimum stability.

## Claims

1. An extrusion additive manufacturing process comprising the extrusion of a polyethylene composition (I) having a melt flow index MIE at 190°C with a load of 2.16 kg, according to ISO 1133-2:2011, of at least 0.1 g/10 min., preferably at least 0.5 g/10 min., said polyethylene composition (I) comprising:

   A) from 1% to 40% by weight of a polyethylene component having a weight average molar mass $M_w$, as measured by GPC (Gel Permeation Chromatography), equal to or higher than 1,000,000 g/mol;
   B) from 1% to 95 % by weight of a polyethylene component having a $M_w$ value from 50,000 to 500,000 g/mol;
   C) from 1% to 59 % by weight of a polyethylene component having a $M_w$ value equal to or lower than 5,000 g/mol;

   wherein the amounts of components A), B) and C) are referred to the total weight of A) + B) + C).

2. The extrusion additive manufacturing process of claim 1, wherein the extrusion of the polyethylene composition (I) is carried out using a FDM 3-D printer.

3. The extrusion additive manufacturing process of claim 1 or 2, wherein the polyethylene composition (I) has a density, determined according to ISO 1183-1:2012 at 23°C, of from 0.900 to 0.965 g/cm$^3$, preferably from 0.930 to 0.960 g/cm$^3$.

4. The extrusion additive manufacturing process according to any of the preceding claims, wherein the polyethylene component A) is an ethylene homopolymer.

5. The extrusion additive manufacturing process according to any of the preceding claims, wherein the weight ratio A)/ C) is of 5 or lower.

6. The extrusion additive manufacturing process according to any of the preceding claims, wherein the shear rate applied during extrusion is equal to or greater than 120 $s^{-1}$, preferably equal to or greater than 150 $s^{-1}$, in particular equal to or greater than 200 $s^{-1}$.

7. A filament for use in an extrusion additive manufacturing process, comprising a polyethylene composition (I) having a melt flow index MIE at 190°C with a load of 2.16 kg, according to ISO 1133-2:2011, of at least 0.1 g/10 min., preferably at least 0.5 g/10 min., said polyethylene composition (I) comprising:

A) from 1% to 40% by weight of a polyethylene component having a weight average molar mass $M_w$, as measured by GPC (Gel Permeation Chromatography), equal to or higher than 1,000,000 g/mol;
B) from 1% to 95 % by weight of a polyethylene component having a $M_w$ value from 50,000 to 500,000 g/mol;
C) from 1% to 59 % by weight of a polyethylene component having a $M_w$ value equal to or lower than 5,000 g/mol;

wherein the amounts of components A), B) and C) are referred to the total weight of A) + B) + C).

8. A printed article obtained from the process of any of claims 1 to 6.

## Patentansprüche

1. Das additive Extrusionsherstellungsverfahren, umfassend die Extrusion einer Polyethylen Zusammensetzung (I) mit einem Schmelzflussindex MIE bei 190°C mit einer Last von 2,16 kg, gemäß ISO 1133-2:2011, von mindestens 0,1 g/10 Min., bevorzugterweise mindestens 0,5 g/10 Min., wobei die Polyethylen-Zusammensetzung (I), umfasst:

A) von 1 bis 40 Gew.-% einer Polyethylenkomponente mit einem Gewichtsmittel molarer Masse Mw, gemessen mittels GPC (Gelpermeationschromatographie), gleich oder mehr als 1.000.000 g/mol;
B) von 1 bis 95 Gew.-% einer Polyethylenkomponente mit einem Mw-Wert von 50.000 bis 500.000 g/mol;
C) von 1 bis 59 Gew.-% einer Polyethylenkomponente mit einem Mw-Wert von oder weniger als 5.000 g/mol;

wobei sich die Anteile der Komponenten A), B) und C) auf das Gesamtgewicht von A) + B) + C) beziehen.

2. Das additive Extrusionsherstellungsverfahren, gemäß Anspruch 1, wobei die Extrusion der Polyethylen-Zusammensetzung (I) unter Verwendung eines FDM-3D-Druckers durchgeführt wird.

3. Das additive Extrusionsherstellungsverfahren, gemäß Anspruch 1 oder 2, wobei die Polyethylen Zusammensetzung (I) eine Dichte hat, gemäß ISO 1183-1:2012 bei 23°C, aufweist, die von 0,900 bis 0,965 $g/cm^3$, vorzugsweise von 0,930 bis 0,960 $g/cm^3$.

4. Das additive Extrusionsherstellungsverfahren, nach einem der vorhergehenden Ansprüche, wobei die Polyethylenkomponente A) ein Ethylenhomopolymer ist.

5. Das additive Extrusionsherstellungsverfahren, nach einem der vorhergehenden Ansprüche, wobei das Gewichtsverhältnis A)/C) 5 oder weniger beträgt.

6. Das additive Extrusionsherstellungsverfahren, nach einem der vorhergehenden Ansprüche, wobei die während der Extrusion angewandte Scherrate gleich oder größer als 120 $s^{-1}$, vorzugsweise gleich oder größer als 150 $s^{-1}$, insbesondere gleich oder größer als 200 $s^{-1}$ ist.

7. Ein Filament zur Verwendung in einem additiven Extrusionsherstellungsverfahren, umfassend eine Polyethylen Zusammensetzung (I) mit einem Schmelzflussindex MIE bei 190°C mit einer Belastung von 2,16 kg, gemäß ISO 1133-2:2011, von mindestens 0,1 g/10 Min., vorzugsweise mindestens 0,5 g/10 Min., wobei die Polyethylen Zusammensetzung (I) umfasst:

A) von 1 bis 40 Gew.-% einer Polyethylenkomponente mit einem Gewichtsmittel molarer Masse Mw, wie durch GPC (Gelpermeationschromatographie) gemessen, die gleich oder höher als 1.000.000 g/mol ist;
B) von 1 bis 95 Gew.-% einer Polyethylenkomponente mit einem Mw-Wert von 50.000 bis 500.000 g/mol;
C) von 1 bis 59 Gew.-% einer Polyethylenkomponente mit einem Mw-Wert von oder weniger als 5.000 g/mol;

wobei sich die Mengen der Komponenten A), B) und C) auf das Gesamtgewicht von A) + B) + C).

**8.** Ein gedruckter Artikel, erhältlich durch das Herstellungsverfahren gemäß einem der Ansprüche 1 bis 6.

## Revendications

**1.** Procédé de fabrication additive par extrusion comprenant l'extrusion d'une composition de polyéthylène (I) présentant un indice de fluidité à chaud MIE à 190 °C sous une charge de 2,16 kg, selon la norme ISO 1133-2:2011, d'au moins 0,1 g/10 min, de préférence d'au moins 0,5 g/10 min, ladite composition de polyéthylène (I) comprenant :

A) 1 % à 40 % en poids d'un constituant polyéthylène présentant une masse molaire moyenne en poids $M_w$, telle que mesurée par CPG (chromatographie par perméation de gel), égale ou supérieure à 1.000.000 g/mole ;
B) 1 % à 95 % en poids d'un constituant polyéthylène présentant une valeur $M_w$ de 50.000 à 500.000 g/mole ;
C) 1 % à 59 % en poids d'un constituant polyéthylène présentant une valeur $M_w$ égale ou inférieure à 5000 g/mole ;

les quantités des constituants A), B) et C) se rapportant au poids total de A) + B) + C).

**2.** Procédé de fabrication additive par extrusion selon la revendication 1, l'extrusion de la composition de polyéthylène (I) étant réalisée à l'aide d'une imprimante 3D FDM.

**3.** Procédé de fabrication additive par extrusion selon la revendication 1 ou 2, la composition de polyéthylène (I) présentant une masse volumique, déterminée selon la norme ISO 1183-1:2012 à 23 °C, de 0,900 à 0,965 g/cm$^3$, de préférence de 0,930 à 0,960 g/cm$^3$.

**4.** Procédé de fabrication additive par extrusion selon l'une quelconque des revendications précédentes, le constituant polyéthylène A) étant un homopolymère d'éthylène.

**5.** Procédé de fabrication additive par extrusion selon l'une quelconque des revendications précédentes, le rapport pondéral A)/C) étant inférieur ou égal à 5.

**6.** Procédé de fabrication additive par extrusion selon l'une quelconque des revendications précédentes, le taux de cisaillement appliqué pendant l'extrusion étant égal ou supérieur à 120 s$^{-1}$, de préférence égal ou supérieur à 150 s$^{-1}$, en particulier égal ou supérieur à 200 s$^{-1}$.

**7.** Filament destiné à être utilisé dans un procédé de fabrication additive par extrusion, comprenant une composition de polyéthylène (I) présentant un indice de fluidité à chaud MIE à 190 °C sous une charge de 2,16 kg, selon la norme ISO 1133-2:2011, d'au moins 0,1 g/10 min, de préférence d'au moins 0,5 g/10 min, ladite composition de polyéthylène (I) comprenant :

A) 1 % à 40 % en poids d'un constituant polyéthylène présentant une masse molaire moyenne en poids $M_w$, telle que mesurée par CPG (chromatographie par perméation de gel), égale ou supérieure à 1.000.000 g/mole ;
B) 1 % à 95 % en poids d'un constituant polyéthylène présentant une valeur $M_w$ de 50.000 à 500.000 g/mole ;
C) 1 % à 59 % en poids d'un constituant polyéthylène présentant une valeur $M_w$ égale ou inférieure à 5000 g/mole ;

les quantités des constituants A), B) et C) se rapportant au poids total de A) + B) + C).

**8.** Article imprimé obtenu à partir du procédé selon l'une quelconque des revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2674019 C1
- CN 103980595 B
- EP 1153968 A
- WO 0121668 A
- WO 2011089017 A
- EP 1188762 A
- WO 2005103096 A
- WO 9704015 A

### Non-patent literature cited in the description


- **M S RAMLI et al.** FDM PREPARATION OF BIO-COMPATIBLE UHMWPE POLYMER FOR ARTIFICIAL IMPLANT. *ARPN J. Eng. Appl. Sci.,* 03 May 2016, 5474-5480
- **HEES, TIMO ; ZHONG, FAN ; KOPLIN, CHRISTOF ; JAEGER, RAIMUND ; MÜLHAUPT, ROLF.** Wear resistant all-PE single-component composites via 1D nanostructure formation during melt processing. *Polymer,* 2018, vol. 151, 47-55
- **BENOIT H. ; REMPP P. ; GRUBISIC Z.** *J. Polymer Sci., Phys. Ed.,* 1967, vol. 5, 753
- **MEISSNER, J. HOSTETTLER.** *Rheol. Acta,* 1994, vol. 33, 1-21
- **ESTERUELAS MA et al.** *Organometallics,* 2003, vol. 22 (3), 395-406
- **ENDERS et al.** *Organometallics,* 2004, vol. 23 (16), 3832-9
- **FERNÁNDEZ et al.** *Organometallics,* 2007, vol. 26 (18), 4402-12
- **MARKUS STÜRZEL ; SHAHRAM MIHAN ; ROLF MÜLHAUPT.** *Chem. Rev.,* 2016, vol. 116 (3), 1398-1433